# EUROPEAN PATENT SPECIFICATION

(11) **EP 0 574 052 B1**
(45) Date of publication and mention of the grant of the patent: **12.08.1998**
(21) Application number: 93201328.7
(22) Date of filing: 07.05.1993
(51) Int. Cl.: H04N 9/45, H04N 11/16

(54) **Color subcarrier frequency regeneration and chrominance demodulation circuits**
Schaltungsanordnungen zur Farb-Hilfsträger-Frequenzregeneration und zur Farbartdemodulation
Circuits de régénération de la fréquence de sousporteuse de couleur et de démodulation de la chrominance

(30) Priority: 12.05.1992 EP 92201353
(43) Date of publication of application: 15.12.1993
(73) Proprietor: Philips Electronics N.V., 5621 BA Eindhoven (NL)
(72) Inventor: Heerkens, Henricus Johannes, NL-5656 AA Eindhoven (NL)
(74) Representative: Steenbeek, Leonardus Johannes

(56) References cited:
- DE-A- 1 814 836
- DE-A- 2 459 804
- GB-A- 1 428 973
- US-A- 3 877 066

## Description

The invention relates to a color subcarrier frequency regeneration circuit comprising a burst phase detector for detecting the burst phase of a PAL signal. The invention also relates to a chrominance demodulation circuit in which the burst phase of a PAL signal is detected. The invention further relates to PAL video signal receivers.

Such circuits for color subcarrier frequency regeneration and chrominance demodulation are disclosed in US-A-3,877,066. In the PAL color television system, the color information is modulated on an alternating subcarrier. Therefore, a color subcarrier frequency reference signal burst is transmitted during each line of the television signal in the color burst period. The phase of this burst alternates from line to line between 135 degrees and 225 degrees. In the NTSC color television system, the burst phase is fixed and amounts to 180 degrees.

In the color subcarrier frequency regeneration circuit, this burst is used to regenerate an internal color frequency signal, which is phase-locked to the burst. In a phase detector, a reference signal from a voltage-controlled oscillator (VCO) is compared to the burst. A low-pass loop filter connects the phase detector output to a phase control input of the VCO. The combination of phase detector, low-pass loop filter and VCO constitutes a phase-locked loop. The desired control behavior is obtained by selecting a suitable loop gain and low-pass loop filter. To allow the loop to adjust rapidly to the color burst, the loop behavior should be fast, but in view of noise, the loop behavior should be slow; consequently, a compromise solution has to be found. Generally, a damping factor of 0,5 and a resonance frequency of 200 Hz are chosen.

By selecting the damping factor and the resonance frequency, a compromise is obtained between the desired control behavior and the desired noise behavior. In the NTSC system, in which the burst phase is fixed, only the double color subcarrier frequency needs to be suppressed. This suppression is achieved by incorporating a small capacitor in parallel to the resistor which constitutes the proportional part of the low-pass loop filter. In the PAL system, however, the effects of the burst being alternating should be suppressed as well. These effects result in a line-alternating phase error of ± 45 degrees. This phase error has a relatively low frequency, *viz.* half the line frequency. In the low-pass loop filter, the capacitance in parallel to the resistor should therefore be increased, whereby the control behavior deteriorates. A further compromise should be sought. This compromise is very difficult and can only be predicted unreliably. In view of the conflicting requirements, the optimum loop filter component values are generally determined by experiment. Moreover, in multistandard receivers, the same loop filter is used for both NTSC and PAL, so that the loop filter should be suitable for both standards. Further, when the burst phase is detected at an angle of ± 45 degrees rather than 90 degrees, the signal-to-noise ratio at the phase detector output is 3 dB lower in the case of PAL signal reception as compared to NTSC signal reception.

It is, *inter alia*, an object of the invention to provide a method of regenerating the color subcarrier frequency in which the detrimental effects of the alternating burst phase are mitigated. In accordance with one aspect of the invention, there is provided a color subcarrier frequency regeneration circuit as defined in claim 1. In accordance with other aspects, the invention provides chrominance demodulation circuits as defined in claims 2 and 3. The invention further provides PAL video signal receivers as defined in claims 4, 5 and 6.

The invention is based on the recognition that when the reference signal, which is applied to the burst phase detector, also has a line-alternating phase, the burst phase is detected at a fixed angle of 90 degrees during each line period, so that no error component of half the line frequency results at the burst detector output. As it is no longer necessary to suppress this error component, the design of the low-pass loop filter is simplified remarkably. Moreover, the above described signal-to-noise ratio drop of 3 dB at the phase detector output is avoided. Except for the line-alternating phase detection, the control and noise behavior of the color subcarrier frequency regeneration circuit is now identical for NTSC and PAL signals.

Similar advantages can be obtained when the output of one of the demodulation branches in a chrominance demodulation circuit, is multiplied by a line-alternating switching signal before it is combined with the other demodulation branch output in the burst phase control loop.

In all aspects of the invention, there is a switching at half the line frequency in the phase detection loop during the burst period.

These and other aspects of the invention will be apparent from and elucidated with reference to the embodiments described hereinafter.

In the drawings:
Fig. 1 shows a first embodiment of a color subcarrier frequency regeneration circuit in accordance with the invention;
Fig. 2 shows an alternative embodiment of a burst phase detection circuit for use in the color subcarrier frequency regeneration circuit of Fig. 1;
Fig. 3 shows phase diagrams of the PAL and NTSC bursts;
Fig. 4 illustrates the detection of the PAL burst phases in accordance with the invention;
Fig. 5 shows a first embodiment of a chrominance demodulation circuit in accordance with the present invention;
Fig. 6 shows a second embodiment of a chrominance demodulation circuit in accordance with the present invention;
Fig. 7 shows a phase diagram of a color burst signal without a phase error, and corresponding demodulated U and ±V signals in the demodulation circuit of Fig. 5 during reception of the color burst signal;
Fig. 8 shows a phase diagram of a color burst signal with a phase error, and corresponding demodulated U and ±V signals in the demodulation circuit of Fig. 5 during reception of the color burst signal; and
Fig. 9 shows several signals occurring in the chrominance demodulation circuit of Fig. 5.

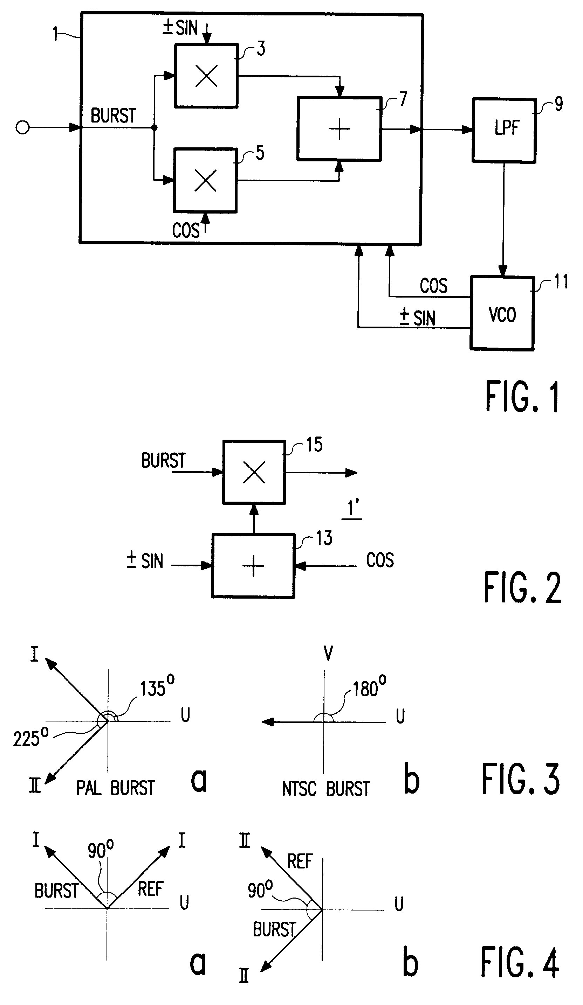

In the color subcarrier frequency regeneration circuit shown in Fig. 1, a color burst signal is applied to a burst phase detector 1. In accordance with the principles of the present invention, the burst phase detector 1 comprises a multiplier 3 for multiplying the color burst signal by a ± sin phase reference signal, and a multiplier 5 for multiplying the color burst signal by a cos phase reference signal. The output signals of multipliers 3 and 5 are added in an adder 7 whose output is connected to an output of the burst phase detector 1. This burst phase detector output is coupled to an input of a voltage-controlled oscillator 11 through a low-pass loop filter 9. The low-pass loop filter 9 may have a construction which is similar to smoothing network 15 shown in Fig. 1 of US-A-3,877,066. The voltage-controlled oscillator 11 furnishes the ± sin phase reference signal and the cos phase reference signal to the burst phase detector 1. The multipliers 3 and 5 may be used for demodulating the chrominance signals as well.

Fig. 2 shows an alternative embodiment 1' of a burst phase detection circuit for use in the color subcarrier frequency regeneration circuit of Fig. 1. In this alternative embodiment, the ± sin phase reference signal and the cos phase reference signal are added in an adder 13 whose output reference signal is applied to a multiplier 15 which also receives the color burst signal. The output of the multiplier 15 is connected to the output of the burst phase detector 1.

The burst phase detection circuits of Figs. 1 and 2 operate as follows. The color burst signal can be described as ± cos(ωt) - sin(ωt), wherein w is the color subcarrier frequency. The phase detection reference can be described as A sin(ωt + θ) + B cos(ωt + θ), wherein θ is the phase error between the color burst signal and the reference signal. The phase detector output signal is formed by the product of the reference signal and the color burst signal. After low-pass filtering in low-pass loop filter 9 to suppress a component of twice the color subcarrier frequency ω, the result is ±A sin(θ) - A cos(θ) ± B cos(θ) + B sin(θ). If in accordance with the principles of the present invention, -A ± B = 0 and B = 1, it follows that A = ±B = ±1 and ±A = 1, so that the phase detector output is (±A + B) sin(θ) = 2 sin(θ). From this it follows that A should be line-alternatingly + 1 and -1. The burst phase detection reference in accordance with the present embodiment is thus line-alternating, see Fig. 4.

Consequently, the color burst is detected at an angle of 90 degrees in each line period, so that the output no longer comprises an alternating component. The dimensioning of the low-pass loop filter 9 can thus be simplified to a large extent. The signal-to-noise ratio is improved by 3 dB. The control and noise behavior of the loop is now identical for PAL and NTSC, with the exception of the line-alternating phase detection.

It is still necessary to determine which line is received: the line with the +135 degrees or the line with the -135 degrees phase shift of the color burst signal with reference to the U chrominance signal (see Fig. 3). If the wrong line is detected, it no longer holds that -A ± B = 0, but that ±A + B = 0 and that -A ± B = ±2 so that the output signal of the burst phase detection circuit has an alternating component whose amplitude depends on the phase error but whose average in time is always zero, so that the control loop does not control.

The reference signal(s) may be formed by sine- shaped signals or by block-shaped signals. The low-pass loop filter 9 rejects any higher harmonic signals which result from the use of block-shaped signals.

In a very simple embodiment, the burst phase detector 1 is made time-discrete, either digital or by means of switched capacitor techniques. Let it be assumed that in such a time-discrete embodiment, the data clock signal is locked to the color burst and has a frequency which is four times the color subcarrier frequency. If the sine signal is sampled as 0 +1 0 -1, the cosine signal will be +1 0 -1 0. The sum of the cosine signal and the sine signal is +1 +1 -1 -1, while the difference between the sine and cosine signals will be -1 +1 +1 -1. The multipliers, which are now very simple to implement, are very accurate, and can easily be switched line-alternatingly.

Fig. 3 shows phase diagrams of the PAL and NTSC color burst signals with reference to the phase of the U chrominance signal. The NTSC color burst signal illustrated in Fig. 3b has a fixed phase shift of 180 degrees with reference to the U chrominance signal. The PAL color burst signal illustrated in Fig. 3a has a phase shift of 135 degrees with reference to the U chrominance signal during first lines I, and a phase shift of 225 degrees (or -135 degrees) with reference to the U chrominance signal during second lines II.

Fig. 4 illustrates the detection of the PAL burst phases in accordance with the invention. During both the first lines I (illustrated in Fig. 4a) and the second lines II (illustrated in Fig. 4b), the reference signal REF has a phase shift of 90 degrees with reference to the phase of the PAL color burst signal in these lines.

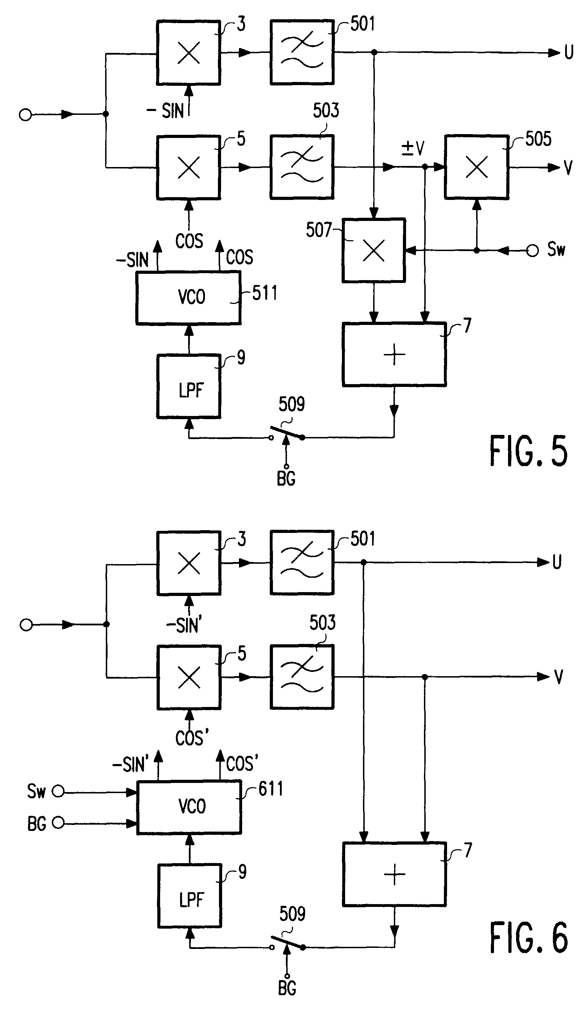

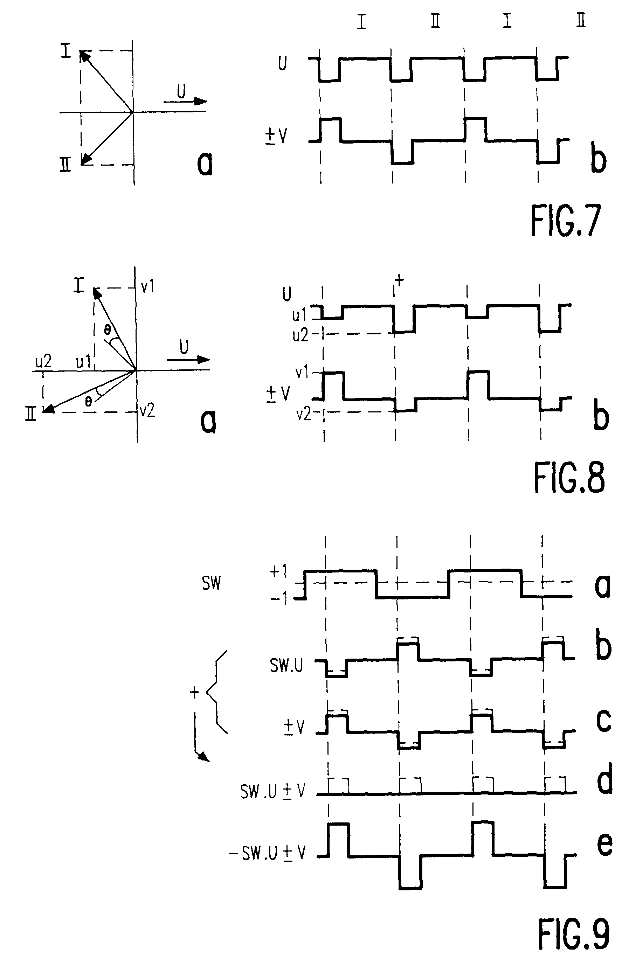

Fig. 5 shows a first embodiment of a chrominance demodulation circuit in accordance with the present invention, in which the burst phase detection function and the chrominance demodulation function are implemented by means of common components. The input signal is applied to a first branch including the multiplier 3 for multiplication (demodulation) by a sine phase reference signal -SIN, and a low-pass filter 501 for rejecting any 2w component. The input signal is also applied to a second branch including the multiplier 5 for multiplication (demodulation) by a cosine phase reference signal COS, and a low-pass filter 503 for rejecting any 2w component. Since the PAL (Phase Alternating Line) ±V chrominance signal supplied by the low-pass filter 503 has an alternating phase, the low-pass filter 503 is succeeded by a multiplier 505 for multiplication by a line- alternating ±1 signal Sw illustrated in Fig. 9a.

In accordance with the present aspect of the invention, the output of the low-pass filter 501 of the U branch is multiplied by the signal Sw in a multiplier 507, whose output signal is added to the output signal of the low-pass filter 503 of the V branch in the adder 7. The output signal of the adder 7 is applied to the low-pass loop filter 9 through a burst gate 509 which is conducting only during the burst period. The burst gate 509 is controlled by a burst gate pulse BG. The output of the low-pass loop filter 9 is applied to a voltage-controlled oscillator 511 which furnishes the sine phase reference signal -SIN and the cosine phase reference signal COS to the multipliers 3 and 5, respectively.

The embodiment of Fig. 5 differs from the embodiment of Figs. 1 and 2 in that the reference signal is now made line-alternating by multiplying the output signal of the U branch by the line-alternating ±1 signal Sw. The operation of the embodiment of Fig. 5 will be further explained below with reference to Fig. 9.

Fig. 6 shows a second embodiment of a chrominance demodulation circuit in accordance with the present invention. In Fig. 6, the outputs of the low-pass filters 501 and 503 are directly connected to the inputs of the adder 7. The multiplier 505 is absent. A voltage-controlled oscillator 611 furnishes a sine phase reference signal -SIN' which is line-alternatingly ±sin(ωt) during the burst period indicated by the burst gate signal BG and controlled by the ±1 signal Sw, while it is simply sin(ωt) outside the burst period. The cosine phase reference signal COS' is line-alternatingly ±cos(ωt) outside the burst period indicated by the burst gate signal BG and controlled by the ±1 signal Sw, while it is simply cos(ωt) during the burst period. As the multiplier 5 is now controlled by the line-alternating reference signal COS', the multiplier 505 of Fig. 5 has become redundant. The multiplier 507 of Fig. 5 has become redundant because the reference signal -SIN' is line-alternating during the burst periods.

Fig. 7 shows a phase diagram of a color burst signal without a phase error, and corresponding demodulated U and ±V signals in the demodulation circuit of Fig. 5 during reception of the color burst signal. The PAL burst phase diagram of Fig. 7a is identical to that shown in Fig. 3a. Fig. 7b shows that the U output of the circuit always has the same sign, while the sign of the demodulated ±V signal before the PAL switch 505 alternates.

Fig. 8 shows a phase diagram of a color burst signal with a phase error θ and corresponding demodulated U and ±V signals in the demodulation circuit of Fig. 5 during reception of the color burst signal. This results in the U and ±V pulses no longer having a fixed amplitude, but alternatingly the original amplitude ± an error component.

Fig. 9 shows several signals occurring in the chrominance demodulation circuit of Fig. 5. Fig. 9a illustrates the line-alternating switching signal Sw. Fig. 9b illustrates the distorted U pulses of Fig. 8b (output of the low-pass filter 501) multiplied by the switching signal Sw as furnished by the multiplier 507. The distorted ±V pulses shown in Fig. 9c are identical to those shown in Fig. 8b, which pulses are furnished by the low-pass filter 503. Fig. 9d illustrates the sum of the curves of Figs. 9b and 9c, as obtained by the adder 7. The amplitude of the error pulses shown in Fig. 9d contains information about the magnitude of the phase error θ, which after low-pass filtering in low-pass loop filter 9 is used to adjust the VCO 511. Fig. 9e illustrates what will happen if the distorted U pulses are multiplied by a switching signal Sw which has the wrong phase because the wrong line number is determined: line-alternating pulses are obtained which have a fixed amplitude containing no information at all about the phase error θ.

Those skilled in the art will be able to design many alternatives to the embodiments described hereinbefore without departing from the scope of the following claims.

## Claims

1. A colour subcarrier frequency regeneration circuit comprising:
a burst phase detector (1) for detecting the burst phase of a PAL signal having a colour burst frequency and a line frequency, said burst phase detector having first input means for receiving a colour burst signal (BURST) and second input means for receiving reference data (±SIN, COS) having said colour burst frequency; and
a reference signal generation circuit (11) coupled to said burst phase detector (1) for furnishing said reference data (±SIN, COS) to said burst phase detector (1), characterized in that said reference data (±SIN, COS) has a phase which alternates at half the line frequency in such a manner that the reference data (±SIN, COS) always has a phase difference of 90° with respect to the colour burst signal (BURST).

2. A chrominance demodulation circuit for a PAL signal having a colour burst period, a colour burst frequency and a line frequency, said chrominance demodulation circuit comprising:
means (3) for multiplying an input signal by a sine phase reference signal (-SIN') of said colour burst frequency to furnish a first output signal (U);
means (5) for multiplying said input signal by a cosine phase reference signal (COS') of said colour burst frequency to furnish a second output signal (V);
means (7) for adding said first (U) and second (V) output signals; and
means (611) coupled to said adding means (7) for generating said sine phase reference signal (-SIN') and said cosine phase reference signal (COS'),
characterized in that a sign of said sine phase reference signal (-SIN') alternates at half the line frequency during said colour burst period.

3. A chrominance demodulation circuit for a PAL signal having a colour burst frequency and a line frequency, said chrominance demodulation circuit comprising:
means (3) for multiplying an input signal by a sine phase reference signal (-SIN) of said colour burst frequency to furnish a first output signal (U);
means (5) for multiplying said input signal by a cosine phase reference signal (COS) of said colour burst frequency to furnish a second output signal (±V);
means (7) for adding said first (U) and second output signals; and
means (511) coupled to said adding means (7) for generating said sine phase reference signal (-SIN) and said cosine phase reference signal (COS);
characterized in that one (±V) of said output signals (U, ±V) is multiplied (507) by a switching signal (Sw) of half the line frequency before addition (7) to the other output signal (U).

4. A receiver for a PAL video signal which includes a chrominance signal modulated on a colour subcarrier at a colour subcarrier frequency, the receiver including a colour subcarrier frequency regeneration circuit (1, 9, 11) which comprises:
a burst phase detector (1) for detecting the burst phase of a PAL signal having a colour burst frequency and a line frequency, said burst phase detector having first input means for receiving a colour burst signal (BURST) and second input means for receiving reference data (±SIN, COS) having said colour burst frequency; and
a reference signal generation circuit (11) coupled to said burst phase detector (1) for furnishing said reference data (±SIN, COS) to said burst phase detector (1), characterized in that said reference data (±SIN, COS) has a phase which alternates at half the line frequency in such a manner that the reference data (±SIN, COS) always has a phase difference of 90° with respect to the colour burst signal (BURST).

5. A receiver for a PAL video signal having a line frequency, a colour burst period, a colour burst frequency, and a chrominance signal modulated on a subcarrier at said colour burst frequency, the receiver comprising a chrominance demodulation circuit (3, 5, 7, 611) for demodulating said chrominance signal and including:
means (3) for multiplying an input signal by a sine phase reference signal (-SIN') of said colour burst frequency to furnish a first output signal (U);
means (5) for multiplying said input signal by a cosine phase reference signal (COS') of said colour burst frequency to furnish a second output signal (V);
means (7) for adding said first (U) and second (V) output signals; and
means (611) coupled to said adding means (7) for generating said sine phase reference signal (-SIN') and said cosine phase reference signal (COS');
characterized in that a sign of said sine phase reference signal (-SIN') alternates at half the line frequency during said colour burst period.

6. A receiver for a PAL video signal having a line frequency, a colour burst frequency, and a chrominance signal modulated on a subcarrier at said colour burst frequency, the receiver comprising a chrominance demodulation circuit (3, 5, 7, 511) for demodulating said chrominance signal and including:
means (3) for multiplying an input signal by a sine phase reference signal (-SIN) of said colour burst frequency to furnish a first output signal (U);
means (5) for multiplying said input signal by a cosine phase reference signal (COS) of said colour burst frequency to furnish a second output signal (±V);
means (7) for adding said first (U) and second output signals; and
means (511) coupled to said adding means (7) for generating said sine phase reference signal (-SIN) and said cosine phase reference signal (COS);
characterized in that one (±V) of said output signals (U, ±V) is multiplied (507) by a switching signal (Sw) of half the line frequency before addition (7) to the other output signal (U).

## Patentansprüche

1. Farbhilfsträgerfrequenzregenerationsschaltung mit:
einem Burstphasendetektor (1) zum Detektieren der Burstphase eines PAL-Signals mit einer Farbburstfrequenz und einer Zeilenfrequenz, wobei der genannte Burstphasendetektor erste Eingangsmittel aufweist zum Empfangen eines Farbburstsignals (BURST) und zweite Eingangsmittel zum Empfangen von Bezugsdaten (±SIN, COS) mit der genannten Farbburstfrequenz; und
einem Bezugssignalgenerator (11), der mit dem genannten Burstphasendetektor (1) gekoppelt ist zum Liefern der genannten Bezugsdaten (±SIN, COS) zu dem genannten Burstphasendetektor (1), dadurch gekennzeichnet, daß die genannten Bezugsdaten (±SIN, COS) eine Phasen haben, die mit der halben Zeilenfrequenz wechselt, und zwar derart, daß die Bezugsdaten (±SIN, COS) immer eine Phasendifferenz von 90° in bezug auf das Farbburstsignal (BURST) haben.

2. Farbartdemodulationsschaltung für ein PAL-Signal mit einer Farbburstperiode, einer Farbburstfrequenz und einer Zeilenfrequenz, wobei diese Farbartdemodulationsschaltung die nachfolgenden Elemente aufweist:
Mittel (3) zum Multiplizieren eines Eingangssignals mit einem Phasenbezugssignal (-SIN) der genannten Farbburstfrequenz zum Liefern eines ersten Ausgangssignals (U);
Mittel (5) zum Multiplizieren des genannten Eingangssignals mit einem Cosinusphasenbezugssignal (COS') mit der genannten Farbburstfrequenz zum Liefern eines zweiten Ausgangssignals (V);
Mittel (7) zum Addieren der genannten ersten (U) und der zweiten (V) Ausgangssignale; und
Mittel (611), die mit den genannten Addiermitteln (7) gekoppelt sind zum Erzeugen des genannten Phasenbezugssignals (-SIN') und des genannten Cosinusphasenbezugssignals (COS'),
dadurch gekennzeichnet, daß ein Vorzeichen des genannten Sinusphasenbezugssignals (-SIB') mit der halben Zeilenfrequenz während der genannten Farbburstperiode wechselt.

3. Farbartdemodulationsschaltung für ein PAL-Signal mit einer Farbburstfrequenz und einer Zeilenfrequenz, wobei diese Farbartdemodulationsschaltung die nachfolgenden Elemente aufweist:
Mittel (3) zum Multiplizieren eines Eingangssignals mit einem Sinusphasenbezugssignal (-SIN) mit der genannten Farbburstfrequenz zum Liefern eines ersten Ausgangssignals (U);
Mittel (5) zum Multiplizieren des genannten Eingangssignals mit einem Cosinusphasenbezugssignal (COS) mit der genannten Farbburstfrequenz zum Liefern eines zweiten Ausgangssignals (±V);
Mittel (7) zum Addieren des genannten ersten (U) und zweiten Ausgangssignals; und
Mittel (511), die mit den genannten Addiermitteln (7) gekoppelt sind zum Erzeugen des genannten Sinusphasenbezugssignals (-SIN) und des genannten Cosinusphasenbezugssignals (COS);
dadurch gekennzeichnet, daß (±V) der genannten Ausgangssignale (U, ±V) mit einem Schaltsignal (Sw) mit der halben Zeilenfrequenz vor der Addierung (7) mit dem anderen Ausgangssignal (U) multipliziert (507) wird.

4. Empfänger für ein PAL-Videosignal, das ein Farbartsignal aufweist, das einem Farbhilfsträger mit einer Farbhilfsträgerfrequenz aufmoduliert ist, wobei dieser Empfänger eine Farbhilfsträgerfrequenzregenerationsschaltung (1, 9, 11) aufweist, welche die nachfolgenden Elemente aufweist:
einen Burstphasendetektor (1) zum Detektieren der Burstphase eines PAL-Signals mit einer Farbburstfrequenz und einer Zeilenfrequenz, wobei der genannte Burstphasendetektor erste Eingangsmittel aufweist zum Empfangen eines Farbburstsignals (BURST) und zweite Eingangsmittel zum Empfangen von Bezugsdaten (±SIN, COS) mit der genannten Farbburstfrequenz; und
einen Bezugssignalgenerator (11), der mit dem genannten Burstphasendetektor (1) gekoppelt ist zum Liefern der genannten Bezugsdaten (±SIN, COS) zu dem genannten Burstphasendetektor (1), dadurch gekennzeichnet, daß die genannten Bezugsdaten (±SIN, COS) eine Phase haben, die mit der halben Zeilenfrequenz derart wechselt, daß die Bezugsdaten (±SIN, COS) immer eine Phasenverschiebung von 90° gegenüber dem Farbburstsignal (BURST) haben.

5. Empfänger für ein PAL-Videosignal mit einer Zeilenfrequenz, einer Farbburstperiode, einer Farbburstfrequenz und einem einem Hilfsträger mit der genannten Farbburstfrequenz aufmodulierten Farbartsignal, wobei dieser Empfänger einen Farbartdemodulator (3, 5, 7, 611) aufweist zum Demodulieren des genannten Farbartsignals und mit:
Mitteln (3) zum Multiplizieren eines Eingangssignals mit einem Sinusphasenbezugssignal (-SIN') mit der genannten Farbburstfrequenz zum Liefern eines ersten Ausgangssignals (U);
Mitteln (5) zum Multiplizieren des genannten Eingangssignals mit einem Cosinusphasenbezugssignal (COS') mit der genannten Farbburstfrequenz zum Liefern eines zweiten Ausgangssignals (V);
Mitteln (7) zum Addieren des genannten ersten (U) und des genannten zweiten (V) Ausgangssignals; und
Mitteln (611), die mit den genannten Addiermitteln (7) gekoppelt sind zum Erzeugen des genannten Sinusphasenbezugssignals (-SIN') und des genannten Cosinusphasenbezugssignals (COS');
dadurch gekennzeichnet, daß ein Vorzeichen des genannten Sinusphasenbezugssignals (-SIN') mit der halben Zeilenfrequenz während der genannten Farbburstperiode wechselt.

6. Empfänger für ein PAL-Videosignal mit einer Zeilenfrequenz, einer Farbburstfrequenz und einem einem Hilfsträger mit der genannten Farbburstfrequenz aufmodulierten Farbartsignal, wobei dieser Empfänger einen Farbartdemodulator (3, 5, 7, 511) aufweist zum Demodulieren des genannten Farbartsignals und mit:
Mitteln (3) zum Multiplizieren eines Eingangssignals mit einem Phasenbezugssignal (-SIN) mit der genannten Farbburstfrequenz zum Liefern eines ersten Ausgangssignals (U);
Mitteln (5) zum Multiplizieren des genannten Eingangssignals mit einem Cosinusphasenbezugssignal (COS) mit der genannten Farbburstfrequenz zum Liefern eines zweiten Ausgangssignals (±V);
Mitteln (7) zum Addieren des genannten ersten (U) und des genannten zweiten Ausgangssignals; und
Mitteln (511), die mit den genannten Addiermitteln (7) gekoppelt sind zum Erzeugen des genannten Sinusphasenbezugssignals (-SIN) und des genannten Cosinusphasenbezugssignals (COS);
dadurch gekennzeichnet, daß ein Ausgangssignal (±V) der genannten Ausgangssignale (U, ±V) vor Addierung (7) mit dem anderen Ausgangssignal (U) mit einem Schaltsignal (Sw) mit der halben Zeilenfrequenz multipliziert wird.

## Revendications

1. Circuit de régénération de la fréquence de la sous-porteuse de chrominance comprenant :
un comparateur de phase de salve (1) pour détecter la phase de la salve d'un signal PAL ayant une fréquence de salve couleur et une fréquence de lignes, ledit comparateur de phase de salve comportant des premiers moyens d'entrée pour recevoir un signal de salve couleur (BURST) et des deuxièmes moyens d'entrée pour recevoir des données de référence (±SIN, COS) ayant ladite fréquence de salve couleur, et
un circuit de génération de signaux de référence (11) couplé audit comparateur de phase de salve (1) pour fournir lesdites données de référence (±SIN, COS) audit comparateur de phase de salve (1), caractérisé en ce que lesdites données de référence (±SIN, COS) ont une phase qui alterne à une fréquence égale à la moitié de la fréquence de lignes d'une façon telle que la différence de phase entre les données de référence (±SIN, COS) et le signal de salve couleur (BURST) soit toujours de 90°.

2. Circuit de démodulation de chrominance pour un signal PAL ayant une période de salve couleur, une fréquence de salve couleur et une fréquence de lignes, ledit circuit de démodulation de chrominance comprenant :
des moyens (3) pour multiplier un signal d'entrée par un signal de référence de phase sinusoïdal (-SIN') de ladite fréquence de salve couleur afin de fournir un premier signal de sortie (U);
des moyens (5) pour multiplier ledit signal d'entrée par un signal de référence de phase cosinusoïdal (COS') de ladite fréquence de salve couleur afin de fournir un deuxième signal de sortie (V);
des moyens (7) pour additionner lesdits premier (U) et deuxième (V) signaux de sortie; et
des moyens (611) couplés auxdits moyens additionneurs (7) pour générer ledit signal de référence de phase sinusoïdal (-SIN') et ledit signal de référence de phase cosinusoïdal (COS'),
caractérisé en ce qu'un signe dudit signal de référence de phase sinusoïdal (-SIN') alterne à une fréquence égale à la moitié de la fréquence de lignes pendant ladite période de salve couleur.

3. Circuit de démodulation de chrominance pour un signal PAL ayant une fréquence de salve couleur et une fréquence de lignes, ledit circuit de démodulation de chrominance comprenant :
des moyens (3) pour multiplier un signal d'entrée par un signal de référence de phase sinusoïdal (-SIN) de ladite fréquence de salve couleur afin de fournir un premier signal de sortie (U);
des moyens (5) pour multiplier ledit signal d'entrée par un signal de référence de phase cosinusoïdal (COS) de ladite fréquence de salve couleur afin de fournir un deuxième signal de sortie (±V);
des moyens (7) pour additionner lesdits premier (U) et deuxième signaux de sortie; et
des moyens (511) couplés auxdits moyens additionneurs (7) pour générer ledit signal de référence de phase sinusoïdal (-SIN) et ledit signal de référence de phase cosinusoïdal (COS),
caractérisé en ce qu'un (±V) desdits signaux de sortie (U, ±V) est multiplié (507) par un signal de commutation (Sw) d'une fréquence égale à la moitié de la fréquence de lignes avant l'addition (7) à l'autre signal de sortie (U).

4. Récepteur pour un signal vidéo PAL qui comprend un signal de chrominance modulé sur une sous-porteuse de chrominance à une fréquence de sous-porteuse de chrominance, le récepteur comprenant un circuit de régénération de la fréquence de la sous-porteuse de chrominance (1, 9, 11) qui comprend :
un comparateur de phase de salve (1) pour détecter la phase de la salve d'un signal PAL ayant une fréquence de salve couleur et une fréquence de lignes, ledit comparateur de phase de salve ayant des premiers moyens d'entrée pour recevoir un signal de salve couleur (BURST) et des deuxièmes moyens d'entrée pour recevoir des données de référence (±SIN, COS) ayant ladite fréquence de salve couleur, et
un circuit de génération de signaux de référence (11) couplé audit comparateur de phase de salve (1) pour fournir lesdites données de référence (±SIN, COS) audit comparateur de phase de salve (1), caractérisé en ce que lesdites données de référence (±SIN, COS) ont une phase qui alterne à une fréquence égale à la moitié de la fréquence de lignes d'une façon telle que la différence de phase entre les données de référence (±SIN, COS) et le signal de salve couleur (BURST) soit toujours de 90°.

5. Récepteur pour un signal vidéo PAL ayant une fréquence de lignes, une période de salve couleur, une fréquence de salve couleur et un signal de chrominance modulé sur une sous-porteuse à ladite fréquence de salve couleur, ledit récepteur comprenant un circuit de démodulation de chrominance (3, 5, 7, 611) pour démoduler ledit signal de chrominance et comprenant :
des moyens (3) pour multiplier un signal d'entrée par un signal de référence de phase sinusoïdal (-SIN') de ladite fréquence de salve couleur afin de fournir un premier signal de sortie (U);
des moyens (5) pour multiplier ledit signal d'entrée par un signal de référence de phase cosinusoïdal (COS') de ladite fréquence de salve couleur afin de fournir un deuxième signal de sortie (V);
des moyens (7) pour additionner lesdits premier (U) et deuxième (V) signaux de sortie; et
des moyens (611) couplés auxdits moyens additionneurs (7) pour générer ledit signal de référence de phase sinusoïdal (-SIN') et ledit signal de référence de phase cosinusoïdal (COS'),
caractérisé en ce qu'un signe dudit signal de référence de phase sinusoïdal (-SIN') alterne à une fréquence égale à la moitié de la fréquence de lignes pendant ladite période de salve couleur.

6. Récepteur pour un signal vidéo PAL ayant une fréquence de lignes, une fréquence de salve couleur et un signal de chrominance modulé sur une sous-porteuse à ladite fréquence de salve couleur, ledit récepteur comprenant un circuit de démodulation de chrominance (3, 5, 7, 511) pour démoduler ledit signal de chrominance et comprenant :
des moyens (3) pour multiplier un signal d'entrée par un signal de référence de phase sinusoïdal (-SIN) de ladite fréquence de salve couleur afin de fournir un premier signal de sortie (U);
des moyens (5) pour multiplier ledit signal d'entrée par un signal de référence de phase cosinusoïdal (COS) de ladite fréquence de salve couleur afin de fournir un deuxième signal de sortie (±V);
des moyens (7) pour additionner lesdits premier (U) et deuxième signaux de sortie; et
des moyens (511) couplés auxdits moyens additionneurs (7) pour générer ledit signal de référence de phase sinusoïdal (-SIN) et ledit signal de référence de phase cosinusoïdal (COS),
caractérisé en ce qu'un (±V) desdits signaux de sortie (U, ±V) est multiplié (507) par un signal de commutation (Sw) d'une fréquence égale à la moitié de la fréquence de lignes avant l'addition (7) à l'autre signal de sortie (U).
